**Europäisches Patentamt**

**European Patent Office**

**Office européen des brevets**

(19)

(11) Veröffentlichungsnummer: **0 229 399**
**B1**

(12) **EUROPÄISCHE PATENTSCHRIFT**

(45) Veröffentlichungstag der Patentschrift: **18.07.90**

(21) Anmeldenummer: **86118165.9**

(22) Anmeldetag: **30.12.86**

(51) Int. Cl.⁵: **G 08 C 23/00**, B 23 B 31/00

(54) **Einrichtung zur drahtlosen Übertragung von Signalen von einem rotierenden Körper.**

(30) Priorität: **10.01.86 DE 3600466**

(43) Veröffentlichungstag der Anmeldung:
**22.07.87 Patentblatt 87/30**

(45) Bekanntmachung des Hinweises auf die
Patenterteilung:
**18.07.90 Patentblatt 90/29**

(84) Benannte Vertragsstaaten:
**AT BE CH DE ES FR GB GR IT LI LU NL SE**

(56) Entgegenhaltungen:
**EP-A-0 099 992**
**EP-A-0 108 857**
**DE-A-1 954 643**
**FR-A-2 566 572**
**US-A-4 213 119**
**US-A-4 310 767**

(73) Patentinhaber: **Zettl GmbH CNC Präzisions- und
Sonderwerkzeuge
Fellenbergstrasse 9
D-8969 Reicholzried (DE)**

(72) Erfinder: **Zettl, Otto
Fellenbergstrasse 9
D-8969 Reicholzried (DE)**

(74) Vertreter: **Hübner, Hans-Jürgen, Dipl.-Ing.
Mozartstrasse 21
D-8960 Kempten (DE)**

Courier Press, Leamington Spa, England.

## Beschreibung

Die Erfindung betrifft eine Einrichtung zur drahtlosen Übertragung von Signalen von einem rotierenden Gehäuse eines Spannfutters zu einer stationären Empfangsstation gemäß dem Oberbegriff von Patentanspruch 1.

Aus der EP 0 108 857 A3 ist eine derartige Einrichtung bekannt. Jeder Spannbacke ist ein Detektor in Form eines Dehnmeßstreifens, Quarzkristalls oder Druckaufnehmers zugeordnet. Über Schleifbahnen und Kontaktstifte oder alternativ mittels flexibler Verbindungskabel werden die mindestens drei Detektoren der Spannbacken mit der Sendeeinheit elektrisch verbunden, die hier aus einer, im Gehäuse angeordneten Umfangsspule besteht, die die Meßwerte induktiv auf eine Statorspule überträgt. Zwar können theoretisch die Meßwerte jeder Spannbacke einzeln übertragen werden, jedoch sind die elektrischen Signale der Meßwertaufnehmer so schwach, daß sie bei der induktiven Übertragung an die stationäre Empfangsstation durch unvermeidliche Störungen verfälscht werden können. Außerdem ist die Abnahme der Meßwertsignale von den beweglichen Spannbacken über Gleitbahnen und Kontaktstifte an das rotierende Gehäuse problematisch, desgleichen über flexible Kabel- und Steckverbindungen, die im äußeren Umfangsbereich liegen und großen Fliehkräften unterworfen sind. Die Meßwertsignale werden ständige übertragen. Eine Beeinflussung der Signale von einer stationären Stelle her ist nicht möglich.

Aus der US-A-4 213 119 ist eine Einrichtung zur drahtlosen Übertragung von Signalen zwischen einer beweglichen Einrichtung und einem stationären Bauteil in bidirektionaler Richtung bekannt, d.h. an der beweglichen Einrichtung befindet sich ein Abfragesender und ein Empfänger und an der stationären Einheit sind ein Empfänger und ein Sender vorgesehen. Diese Einrichtung ermöglicht eine Kommunikation zwischen beweglicher und stationärer Einheit. Die Datenübermittlung erfolgt auf optischem Weg.

Die FR-A-2 566 572 zeigt eine ähnliche Einrichtung in Verbindung mit einem maschinellen Werkzeug, wobei ein stationärer Abfragesender verwendet wird, um Daten vom beweglichen Werkzeug an eine stationäre Einheit übermitteln zu können. Die Stromversorgung für das maschinelle Werkzeug erfolgt über eine Induktionsstrecke, während die Datenübermittlung auf optischem Wege erfolgt. Über den Aufbau des maschinellen Werkzeuges ist weiter nichts gesagt.

Aufgabe der Erfindung ist es, eine Einrichtung bei einem Spannfutter der eingangs genannten Art so auszubilden, daß ein bidirektionaler Datenaustausch zwischen dem rotierenden Gehäuse und der Empfangsstation möglich ist, die Datenabgabe der Sendeeinheit im Spannfutter von außen her beeinflußbar ist und eine absolut störungsfreie und zuverlässige Datenübertragung der gemessenen Detektorsignale gewährleistet ist.

Diese Aufgabe wird bei einer Einrichtung mit den Merkmalen des Oberbegriffes von Patentanspruch 1 durch dessen Kennzeichnungsmerkmale gelöst.

Im Gegensatz zum eingangs genannten Stand der Technik werden die schwachen Meßwertsignale nicht direkt von der Sendeeinheit an die Empfangsstation berührungslos übertragen, sondern zuerst einer elektronischen Signalverarbeitungseinrichtung und dann einem Verstärkerteil zugeführt, so daß von der Sendeeinheit Daten an die Empfangsstation übermittelt werden, die entsprechend den Abfragebefehlen aufbereitet und ggf. ausgewählt und verstärkt sind. Zuverlässigkeit und Vielseitigkeit der Datenübermittlung sind dadurch unvergleichlich größer. Der Detektor und der die elektronische Auswerteschaltung und den Verstärkerteil enthaltende Block können koaxial, dicht benachbart angeordnet werden, so daß die Signalübertragungsstrecke extrem kurz ist, wodurch Störungen ausgeschlossen sind.

Mit der Erfindung ist eine kontinuierliche oder periodische Kommunikation zwischen Spannfutter und einer kombinierten Sende-/Empfangsstation möglich, so daß beliebige Betriebszustände, wie Spannkraft, Zustand der Schneide eines Werkzeuges, Beginn, Verlauf und Ende einer Bearbeitung, Zustand des Werkstückes usw. abgefragt und ausgewertet werden können. Die Signalverarbeitungseinrichtung im Gehäuse des Spannfutters kann zum Beispiel auch bei Erfassung bestimmter Betriebszustände aufgrund eines erkannten Schwingungsmusters den Verstärkerteil selbsttätig aktivieren, um beispielsweise vor einem unmittelbar bevorstehenden Bruch eines Werkzeuges oder des Werkstückes zu warnen.

Die Stromzufuhr kann, wie es schon bekannt ist, induktiv, insbesondere über dasselbe Induktionsspulenpaar erfolgen, das auch die Datenübertragung übernimmt, wie es auch möglich ist, daß im Gehäuse eingebaute Knopfzellen die Stromversorgung übernehmen. Gerade in diesem Fall bringt die bidirektionale Datenübermittlung Vorteile insofern, als der größte Stromverbraucher, nämlich die Verstärkerschaltung nur kurzfristig von der stationären Einheit periodisch aktiviert zu werden braucht.

Weitere Ausgestaltungen der Erfindung sind Gegenstände der Unteransprüche.

Anhand der Zeichnung wird die Erfindung beispielsweise näher beschrieben.

Es zeigt:

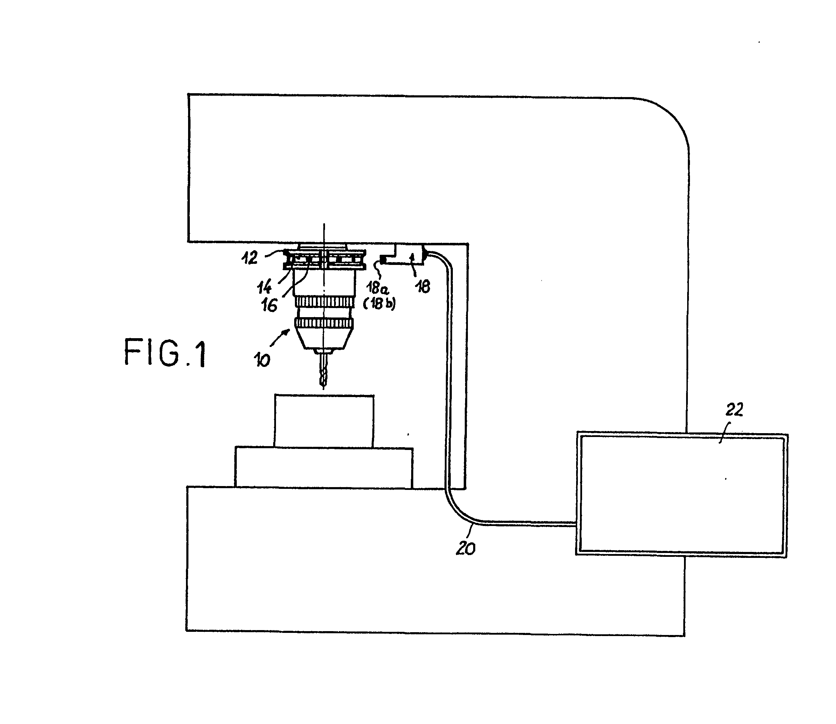

Fig. 1 eine Ansicht einer Bohrmaschine,

Fig. 2 die Ansicht eines, in einen Spindelkopf eingesetzten Spannfutters,

Fig. 3 eine Schnittansicht des Spannfutters,

Fig. 4 die im Spannfutter gem. Figuren 2 und 3 eingesetzte elektronische Baueinheit in größerem Maßstab,

Fig. 5 eine Stirnansicht der Baueinheit gem. Fig. 4 und

Fig. 6 eine Schnittansicht durch eine abgewandelte Ausführungsform der elektronischen Baueinheit.

Ein Spannfutter 10 einer Bohr- oder Fräsmaschine zeigt eine Anzahl im Boden der Greiferrille 12 in Umfangsabständen angeordnete Radialbohrungen 62, mit denen radial ausgefluchtet im Inneren des Spannfutters angeordnete, eine Sendeeinheit 14 bildende Infrarot-Leuchtdioden und eine Empfängereinheit 16 bildende Fotodioden oder Fototransistoren vorgesehen sind. In der Drehebene dieser Sende- und Empfängereinheiten 14, 16 befindet sich im Abstand neben dem Spannfutter 10 eine ortsfeste Sende- und Empfangsstation 18, die am Maschinenrahmen befestigt ist und elektrisch über die Leitung 20 mit einer Kontroll-Steuer- und Anzeigeeinheit 22 verbunden ist. Die Sende- und Empfangsstation 18 umfaßt eine Sendestation 18a und eine Empfangsstation 18b.

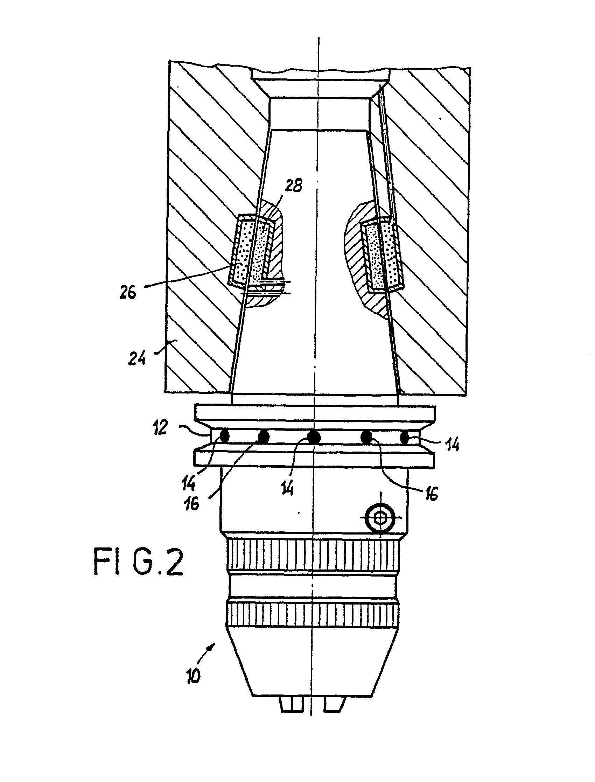

Gemäß Figur 2 ist in den Spindelkopf 24 eine Primärspule 26 eingesetzt, der eine Sekundärspule 28 im Spannfutter 10 für eine induktive Stromversorgung gegenüberliegt.

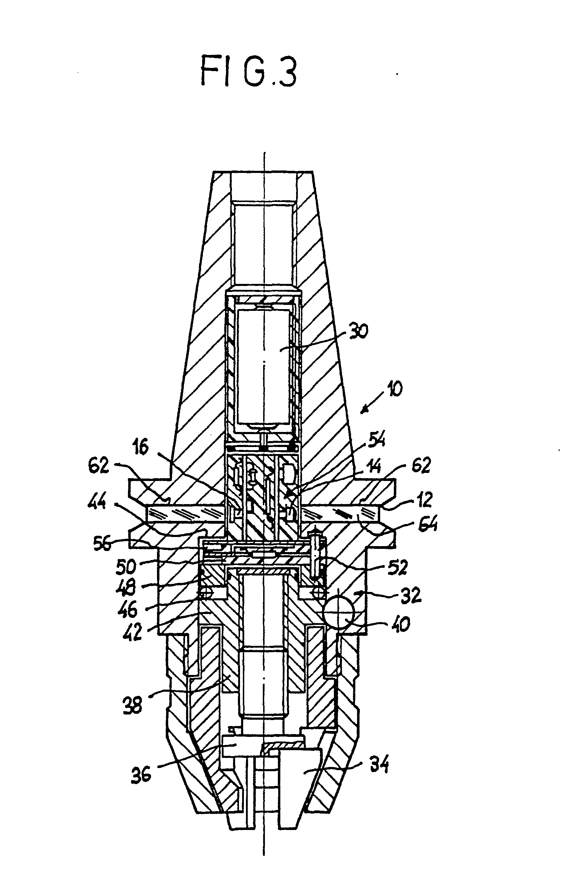

Bei dem Spannfutter 10 gemäß Figur 3 erfolgt die Stromversorgung alternativ durch eine eingebaute Batterie 30. Das Spannfutter 10 besteht aus einem zweiteiligen Gehäuse 32, Spannbacken 34, die in einem Schiebeglied 36 geführt sind, das in einem Drehglied 38 verschraubbar ist, das seinerseits in bekannter Weise über eine Schneckenwelle 40 von außen mittels eines Schlüssels drehbar ist. Zwischen einem Flansch 42 des Drehgliedes 38 und einer Ringschulter 44 des Gehäuses 32 sind ein Kugellagerkranz 46, ein Stützring 48 und ein Ringkörper 50 unter axialer Vorspannung axial hintereinander angeordnet. Bei eingespanntem Werkzeug wird die axiale Komponente der Reaktionsspannkraft auf den Ringkörper 50 übertragen. Der Stützring 48 trägt einen axial vorspringenden Stift 52, der den Ringkörper 50 durchsetzt und in ein Sackloch in der Ringschulter 44 des Gehäuses 32 zur Drehsicherung eingreift.

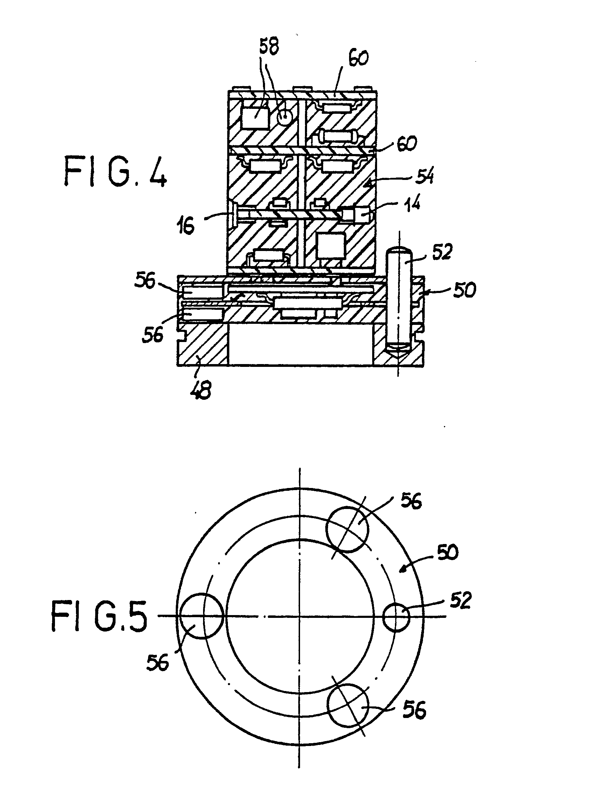

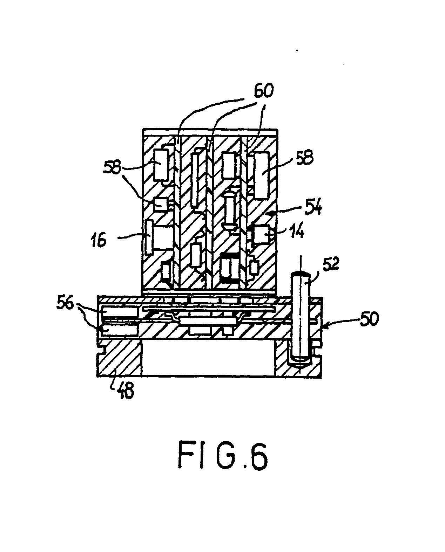

Der Ringkörper 50 und ein an diesen rückseitig anschließender kreiszylindrischer Block 54 bilden eine Baueinheit. Der Block 54 enthält die gesamte Elektronik. Im Ringkörper 50 sind in gleichen Umfangsabständen drei Paare von Drucksensoren angeordnet, die einen Detektor 56 bilden. Im Block 54 befinden sich vier parallele mit elektronischen Bauteilen 58 bestückte Platinen 60, die bei der Ausführung gemäß Figur 4 in Radialebenen und der Ausführung gemäß Figur 6 in achsparallelen Ebenen angeordnet sind. Die elektrischen bzw. elektronischen Bauteile 58 sind intern verdrahtet und bilden eine Signalverarbeitungseinrichtung, die mit den Sensoren des Detektors 56 elektrisch verbunden ist. Im Bereich des Außenumfanges des Blockes 54 sind in einer Radialebene abwechselnd in Umfangsabständen die Dioden der Sendeeinheit 14 und Dioden der Empfängereinheit angeordnet und elektrisch mit einem Verstärkerteil der Signalverarbeitungseinrichtung verbunden. Jeder dieser Dioden ist eine Radialbohrung 62 im Schaft des Gehäuses 32 zugeordnet, durch die hindurch die Infrarotsignale der Dioden ein- bzw. austreten können. Die Radialbohrungen 62 sind mit einem lichtdurchlässigen Material 64 ausgegossen. Unmittelbar hinter dem zylindrischen Block 54 befindet sich ein zylindrisches Gehäuse mit der Batterie 30, die über einen zentralen Kontakt und einen Kontaktring die Stromversorgung zur Signalverarbeitungseinrichtung herstellt.

**Patentansprüche**

1. Einrichtung zur drahtlosen Übertragung von Signalen von einem rotierenden Gehäuse (32) eines Spannfutters (10) zu einer stationären Empfangsstation (18b), mit einem im Gehäuse (32) angeordneten, Betriebszustandänderungen erfassenden Detektor (56), der elektrisch mit einer, am Außenumfang des Gehäuses (32) angeordneten Sendeeinheit (14) verbunden ist, welche der stationären Empfangsstation (18b) benachbart angeordnet ist, wobei im Gehäuse (32) ein Schiebeglied (36) zur gemeinsamen Verstellung mehrerer Spannbacken (34) des Spannfutters (10) axial beweglich gelagert ist, dadurch gekennzeichnet, daß ein mit dem Schiebeglied (36) in Schraubeingriff stehendes, von außen manuell betätigbares Drehglied (38) im Gehäuse (32) drehbar gelagert ist, das mit einem Außenflansch (42) versehen ist, zwischen dem und einer Ringschulter (44) des Gehäuses (32) axial aneinanderliegend, ein undrehbarer Stützring (48) und ein, den Detektor (56) tragender Ringkörper (50) mit axialer Vorspannung eingesetzt sind, daß der Detektor (56) mehrere in Umfangsabständen angeordneten Sensoren aufweist, daß im Gehäuse (32) ein vergossener Block (54) axial eingesetzt ist, der eine mit dem Detektor (56) elektrisch verbundene, elektronische Signalverarbeitungseinrichtung mit Verstärker aufweist, der seinerseits mit der Sendeeinheit (14) elektrisch verbunden ist, und daß weiterhin im Gehäuse (32) eine Empfängereinheit (16) zum Signalempfang von einer ortsfesten Sendestation (18a) angeordnet und der Signalausgang der Sendeeinheit (14) durch den Signalempfang der Empfängereinheit (16) beeinflußbar ist.

2. Einrichtung nach Anspruch 1, dadurch gekennzeichnet, daß die Sendeeinheit (14) mehrere etwa in derselben Radialebene liegende, umfangsversetzte Infrarot-Leuchtdioden und die Empfängereinheit (16) mindestens eine, in derselben Radialebene angeordnete Fotodiode oder -transistor umfaßt.

3. Einrichtung nach Anspruch 2, dadurch gekennzeichnet, daß in einer äußeren Greiferrille (12) des Gehäuses (32) in Umfangsabständen Radialbohrungen (62) vorgesehen sind, die die Gehäuseumfangswand durchsetzen und denen in radialer Ausfluchtung im Gehäuseinnenraum je eine der Dioden der Sende- und Empfängereinheiten (14, 16) zugeordnet sind, und daß die Radialbohrungen (62) nach außen durch ein lichtdurchlässiges Material (64) geschlossen sind.

4. Einrichtung nach einem der Ansprüche 1 - 3, dadurch gekennzeichnet, daß der die elektronische Signalverarbeitungseinrichtung enthaltende Block (54) mehrere parallel zueinander angeordnete und mit elektrischen und elektronischen Elementen (58) bestückte Platinen (60) aufweist.

5. Einrichtung nach einem der Ansprüche 1 - 4, dadurch gekennzeichnet, daß der Block (54) mit dem im Durchmesser größeren Ringkörper (50) zu einer axial einschiebbaren Baueinheit verbunden ist, die drehfest im Gehäuse (32) gelagert ist.

6. Einrichtung nach einem der Ansprüche 1 - 5, dadurch gekennzeichnet, daß der Block (54) kreiszylindrisch ausgebildet ist.

7. Einrichtung nach einem der Ansprüche 1 - 6, dadurch gekennzeichnet, daß der Block (54) im Bereich seines Außenumfanges die Dioden der Sende- und Empfängereinheiten (14, 16) aufweist.

8. Einrichtung nach Anspruch 4 - 7, dadurch gekennzeichnet, daß die Platinen (60) im Block in Radialebenen (FIG. 4) oder achsparallelen Ebenen (FIG. 6) angeordnet sind.

## Revendications

1. Dispositif pour la transmission sans fil de signaux à partir d'un corps en rotation (32) d'un mandrin de serrage (10) vers un poste de réception fixe (18b), avec un détecteur (56) détectant les variations de conditions de fonctionnement, disposé dans un boîtier et relié électriquement à une unité d'émission (14) disposée sur la périphérie extérieure du corps (32) et disposée près du poste de réception fixe (18b), un élément coulissant (36) pour le déplacement commun de plusieurs mâchoires de serrage (34) du mandrin de serrage (10) étant placé, de manière à pouvoir se déplacer axialement, dans le corps (32), caractérisé en ce qu'un élément rotatif (38), pouvant être actionné manuellement de l'extérieur, s'engageant par vissage dans l'élément coulissant (36), est placé, de manière à pouvoir tourner, dans le corps (32) pouvu d'une bride extérieure (42), entre laquelle et un épaulement annulaire (44) du corps (32) sont insérés par précontrainte axiale, axialement l'un à côté de l'autre, une bague d'appui (48) non rotative et un corps annulaire (50) portant le détecteur (56), que le détecteur (56) présente plusieurs senseurs disposés à intervalles circonférentiels, que, dans le corps (32), il est inséré axialement un bloc coulé (54) présentant un dispositif de traitement des signaux électroniques relié électriquement au détecteur (56), avec amplificateur, à son tour, relié électriquement à l'unité d'émission (14) et, par ailleurs, qu'il est disposé, dans le corps (32), une unité de réception (16) pour la réception des signaux d'un poste d'émission fixe (18a) et que la sortie des signaux de l'unité d'émission (14) peut être influencée par la réception des signaux de l'unité de réception (16).

2. Dispositif suivant la revendication 1, caractérisé en ce que l'unité d'émission (14) comprend plusieurs diodes luminescentes infrarouges décalées en circonférence et situées dans environ le même plan radial et que l'unité de réception (16) comprend au moins une photo-diode ou un photo-transistor disposé dans le même plan radial.

3. Dispositif suivant la revendication 2, caractérisé en ce que, dans une rainure de saisie (12) extérieure du corps (32), sont prévus, à des intervalles circonférentiels, des orifices radiaux (62) traversant la paroi périphérique du corps, à chacun desquels correspond, radialement fuyante à l'intérieur du corps, l'une des diodes des unités d'émission et de réception (14, 16) et que les orifices radiaux (62) sont obturés vers l'extérieur par un matériau (64) translucide.

4. Dispositif suivant l'une des revendications 1 à 3, caractérisé en ce que le bloc (54) contenant le dispositif de traitement des signaux électroniques présente plusieurs platines (60) disposées parallèlement l'une par rapport à l'autre et équipées d'éléments (58) électriques et électroniques.

5. Dispositif suivant l'une des revendications 1 à 4, caractérisé en ce que le bloc (54) est relié, avec le corps annulaire (50) de diamètre supérieur, à un élément pouvant être inséré axialement et placé, de manière fixe en rotation, dans le corps (32).

6. Dispositif suivant l'une des revendications 1 à 5, caractérisé en ce que le bloc (54) est construit de forme cylindrique.

7. Dispositif suivant l'une des revendications 1 à 6, caractérisé en ce que le bloc (54) présente, dans la zone de sa périphérie extérieure, les diodes des unités d'émission et de réception (14, 16).

8. Dispositif suivant les revendications 4 à 7, caractérisé en ce que les platines (60) dans le bloc sont disposées dans des plans radiaux (fig. 4) ou des plans parallèles à l'axe (fig. 6).

## Claims

1. An installation for the wireless transmission of signals from a rotating housing (32) of a chuck (10) to a stationary receiving station (18b), having a detector (56) which is arranged in the housing (32) and picks up changes in the operating state, the detector being electrically connected with a transmitting unit (14) which is arranged on the outer periphery of the housing (32) and adjacent to the stationary receiving station (18b); and a sliding member (36) mounted in axially movable manner in the housing (32), for common adjustment of several clamping jaws (34) of the chuck (10); characterised in that a rotating member (38) is rotatably mounted in the housing (32) in screwed engagement with the sliding member (36) and actuatable manually from the outside, the rotating member (38) having an external flange (42), between which flange and an annular shoulder (44) of the housing (32) there are inserted, in axially adjacently-lying and axially pre-stressed manner, a non-rotatable support ring (48) and an annular member (50) which carries the detector (56); in that the detector (56) has a plurality of sensors which are arranged spaced apart on the periphery; in that in the housing (32) there is axially inserted a cast block (54) having an electronic signal processing installation which is electrically connected with the detector (56) and which has an amplifier which, in its turn, is electrically connected with the transmitting unit (14); and in that furthermore in the housing (32) there is arranged a receiving unit (16) for receiving signals from a stationary transmitting station (18a), and the signal output of the transmitting unit (14) is influenceable by signals received from the receiving unit (16).

2. An installation according to claim 1, characterised in that the transmitting unit (14) comprises a plurality of peripherally-offset infra-red luminous diodes which lie approximately in the same radial plane, and the receiving unit (16) comprises at least one photo-diode or photo-transistor arranged in the same radial plane.

3. An installation according to claim 2, characterised in that radial bores (62) are provided in an outer gripping groove (12) of the housing (32), the bores being spaced apart on the periphery and passing through the peripheral wall of the housing, a respective diode of the transmitting and receiving units (14, 16) being associated with each bore in radial alignment therewith in the interior of the housing; and in that the radial bores (62) are closed towards the outside by a light-permeable material (64).

4. An installation according to any one of claims 1—3, characterised in that the block (54) which contains the electronic signal processing installation has a plurality of plates (60) which are arranged parallel to one another and which are equipped with electrical and electronic elements (58).

5. An installation according to any one of claims 1—4, characterised in that the block (54) is connected with the annular member (50), which member is of larger diameter, in such a manner as to form an axially insertable constructional unit which is mounted non-rotatably in the housing (32).

6. An installation according to any one of claims 1 - 5, characterised in that the block (54) is of circular cylindrical construction.

7. An installation according to any one of claims 1—6, characterised in that the block (54) has the diodes of the transmitting and receiving units (14, 16) in the region of its outer periphery.

8. An installation according to claims 4—7, characterised in that the plates (60) are arranged in the block in radial planes (FIG. 4) or axially parallel planes (FIG. 6).

FIG.1

FIG.2

# FIG.3

FIG. 4

FIG.5

FIG.6